# EUROPÄISCHE PATENTSCHRIFT

(11) **EP 2 567 607 B1**
(45) Veröffentlichungstag und Bekanntmachung des Hinweises auf die Patenterteilung: **27.02.2019**
(21) Anmeldenummer: 12401176.8
(22) Anmeldetag: 23.08.2012
(51) Int. Cl.: A01C 23/00, A01B 79/00

(54) **Bedienungseinrichtung für landwirtschaftliche Verteilmaschinen**
Operation device for agricultural distribution machines
Dispositif de commande pour machines de répartition agricoles

(30) Priorität: 09.09.2011 DE 102011053431
(43) Veröffentlichungstag der Anmeldung: 13.03.2013
(73) Patentinhaber: Amazonen-Werke H. Dreyer GmbH & Co. KG, 49205 Hasbergen (DE); Herbert Dammann GmbH, 21614 Buxtehude-Hedendorf (DE)
(72) Erfinder: Austermann, Stefan, 48291 Telgte (DE); Kiefer, Stefan, 49074 Osnabrück (DE); Nagel, Michael, 27804 Berne (DE)

(56) Entgegenhaltungen:
- US-A- 6 122 581
- US-A1- 2004 016 822
- US-B1- 6 216 614

## Beschreibung

Die Erfindung betrifft eine Bedienungseinrichtung für landwirtschaftliche Verteilmaschinen gemäß des Oberbegriffes des Patentanspruches 1.

Bedienungseinrichtungen für landwirtschaftliche Verteilmaschinen, wie Feldspritzen und Sämaschine sind bekannt. Diese Verteilmaschinen weisen über ihre Arbeitsbreite in gleichmäßiger Aufteilung nebeneinander angeordnete Ausbringorgane in Form von Spritzdüsen oder Säscharen auf. Diesen Ausbringorganen sind fernbedienbare Abschaltelemente zugeordnet, um die Ausbringung von auszubringenden Materialien zu den Ausbringorganen zuzulassen oder abzuschalten. Die Abschaltelemente werden über eine Bedienungseinrichtung, die manuell oder von einem Bordcomputer betätigt werden kann, angesteuert. Um die Ausbringorgane über die Abschaltelemente zuzuschalten oder abzuschalten, sind die Ausbringorgane und die zugeordneten Abschaltelemente gruppenweise zu Teilbreiten zusammengefasst. Somit können also gleichzeitig mehrere, nämlich die gruppenweise zusammengefassten Ausbringorgane über die zugeordneten Abschaltelemente entsprechend der breite der Teilbreiten abschnittsweise von der Bedienungseinrichtung entsprechend angesteuert und betätigt werden. Diese gruppenweise Ansteuerung entsprechend den einzelnen Teilbreiten erfolgt sowohl im Hand- wie über dem Bordcomputer auch im Automatikmodus.

Eine derartige Bedienungseinrichtung zeigt die US6216614. Mittels dieser als Kontrollsystem ausgebildeten Bedienungseinrichtung für eine Feldspritze sind individuell oder sektionsweise steuerbare Ausbringpunkte bekannt, wobei die Steuerung der Ausbringpunkte einer Steuereinheit obliegt. Die Steuerung der Ausbringpunkte erfolgt durch das Kontrollsystem automatisch anhand einer Applikationskarte. Eine Handsteuerung wird gleichfalls erwähnt. Auch können einzelne Ausbringpunkte oder Gruppen von Ausbringpunkten gesteuert werden.

Es werden hier entweder Gruppen von Ausbringpunkten ausschließlich gleichzeitig durch einen Kontrollpunkt geschaltet oder für den Fall, dass jedem Aktor ein einzelner Kontrollknoten zugeordnet ist, werden ausschließlich einzelne Ausbringpunkte geschaltet. Es ist also nicht möglich, im Falle eines Automatikmodus einzelne Ausbringpunkte zu steuern und im Handmodus eine ganze Gruppe, da die jeweilige Anzahl der geschalteten Ausbringpunkte davon abhängt, wie viele Ausbringpunkte jeweils den Kontrollknoten zugeordnet sind.

Der Erfindung liegt die Aufgabe zu Grunde, entsprechend den tatsächlich vorherrschenden Gegebenheiten eine verbesserte Anpassung der Ausbringung der Materialien an die Kontur der mit dem auszubringenden Material zu behandelnden Feldfläche in einfacher Weise erreichen zu können.

Diese Aufgabe wird erfindungsgemäß durch eine Bedienungseinrichtung für landwirtschaftliche Verteilmaschinen gemäß des Anspruches 1 gelöst. Infolge dieser Maßnahmen lassen sich in Handmodus der Einfachheit halber nur jeweils gruppenweise zusammengefasste Abschaltelemente gemeinsam betätigen, und zwar entsprechend der Breite einer Teilbreite, während im Automatikmodus jedes einzelne Abschaltelemente, welches einem Ausbringelement zugeordnet ist, separat zu betätigen ist. Somit ist in automatischer Weise im Automatikmodus durch Ansteuerung der fernbedienbaren Abschaltelemente durch den Bordcomputer eine sehr kleinflächige Anpassung der Ausbringung der Materialien an die Flächengegebenheiten möglich.

Auch ist eine gröbere Rasterung der Ansteuerung der Abschaltelemente über dem Bordcomputer dadurch in einfacher Weise möglich, dass über dem Bordcomputer die den Ausbringelementen zugeordneten Abschaltelemente zusätzlich entsprechend des Handmodus gruppenweise betätigbar sind.

Eine vorteilhafte Aufteilung der einzelnen Bereiche der abzuschaltenden Ausbringelemente ergibt sich dadurch, dass die gruppenweise zusammengefassten Abschaltelemente, die jeweils den Ausbringelementen zugeordnet sind, der einer Teilbreite der Verteilmaschine zugeordneten Abschaltelementen mit zugeordneten Ausbringelementen entsprechen.

Um in einfacher Weise die Abschaltelemente der Ausbringorganen in optimierter Weise entsprechend den flächenspezifischen Gegebenheiten ansteuern zu können, ist vorgesehen, dass zur Ansteuerung der Ausbringelemente über die Abschaltelemente mittels des Bordcomputers in dem Speicher des Bordcomputers ein standortspezifisch gestütztes Steuerungs- und/oder Regelprogramm hinterlegt ist, aufgrund dessen der Bordcomputer die jeweiligen Abschaltelemente der jeweiligen Ausbringelemente entsprechend ansteuert.

Die erfindungsgemäße Bedienungseinrichtung lässt sich bei einer landwirtschaftlichen Verteilmaschine, die als Feldspritze mit einem als Verteilerbalken, welcher als ein zusammenklappbares Verteilergestänge ausgebildet ist, ausgebildet ist, einsetzen. In diesem Falle sind die Ausbringelemente als Spritzflüssigkeit ausbringende Düsenelemente ausgebildet.

Die erfindungsgemäße Bedienungseinrichtung lässt sich bei einer landwirtschaftlichen Verteilmaschine, die Verteilmaschine als Sämaschine ausgebildet ist, einsetzen. Hierbei sind die Ausbringelemente als Saatgut und/oder Dünger verteilende Schare ausgebildet.

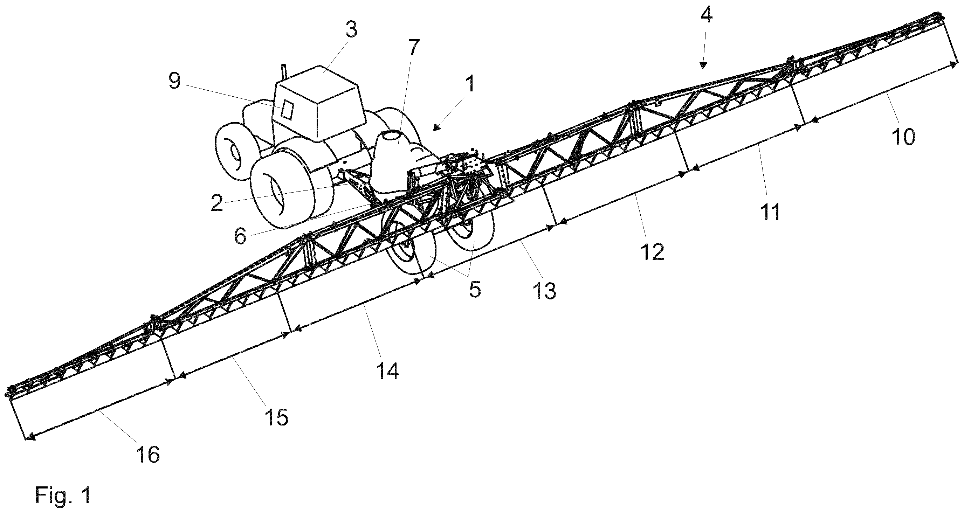

Weitere Einzelheiten der Erfindung sind der Beispielsbeschreibung und den Zeichnungen zu entnehmen. Hierbei zeigen
- Fig. 1: die landwirtschaftliche Feldspritze mit dem sich in Arbeitsstellung befindlichen Verteilergestänge und der zugeordneten Bedienungseinrichtung, wobei über alle an dem Verteilergestänge angeordneten Spritzdüsen Spritzflüssigkeit ausgebracht wird in perspektivischer und Prinzipdarstellung,

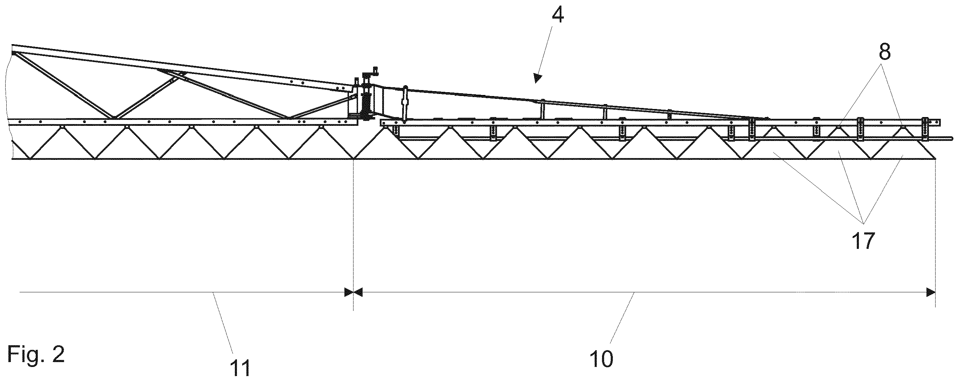

- Fig.2: der rechte Teil des Verteilergestänges in der Betriebsweise gemäß Fig.1 im vergrößerten Maßstab,

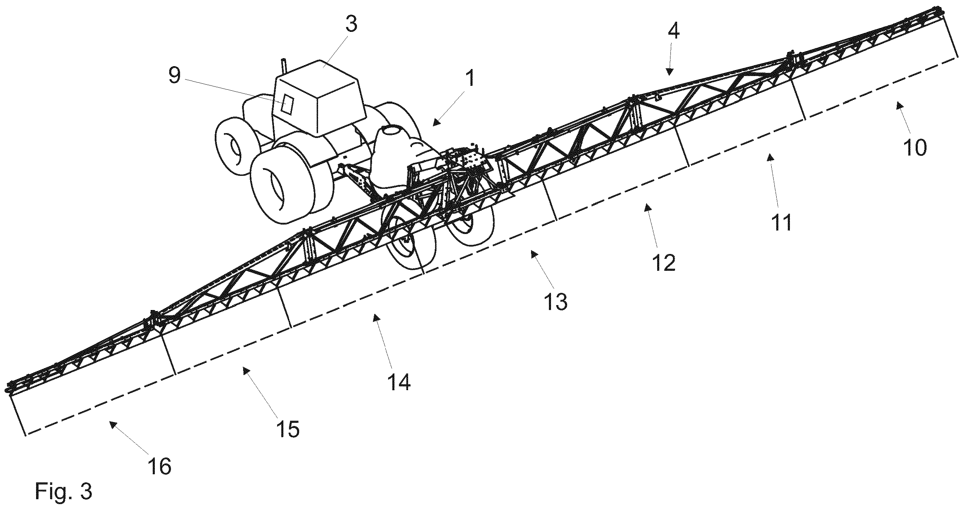

- Fig. 3: die landwirtschaftliche Feldspritze mit dem sich in Arbeitsstellung befindlichen Verteilergestänge und der zugeordneten Bedienungseinrichtung, wobei nur über jede zweite der an dem Verteilergestänge angeordneten Spritzdüsen Spritzflüssigkeit im Automatikmodus ausgebracht wird in perspektivischer und Prinzipdarstellung,

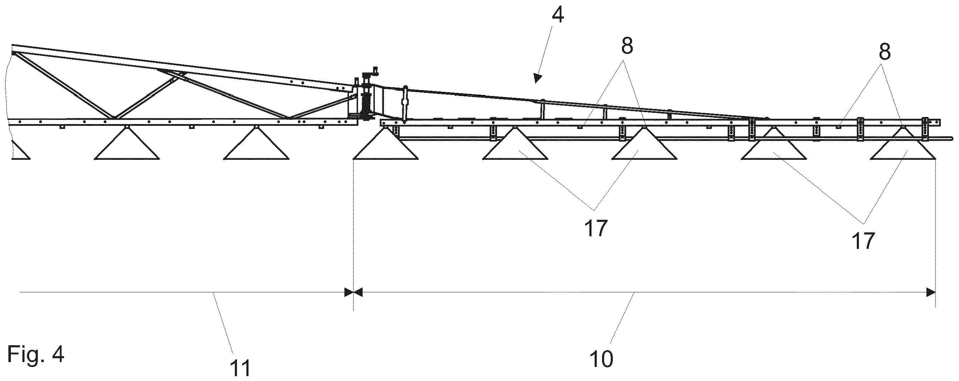

- Fig.4: der rechte Teil des Verteilergestänges in der Betriebsweise gemäß Fig.3 im vergrößerten Maßstab,

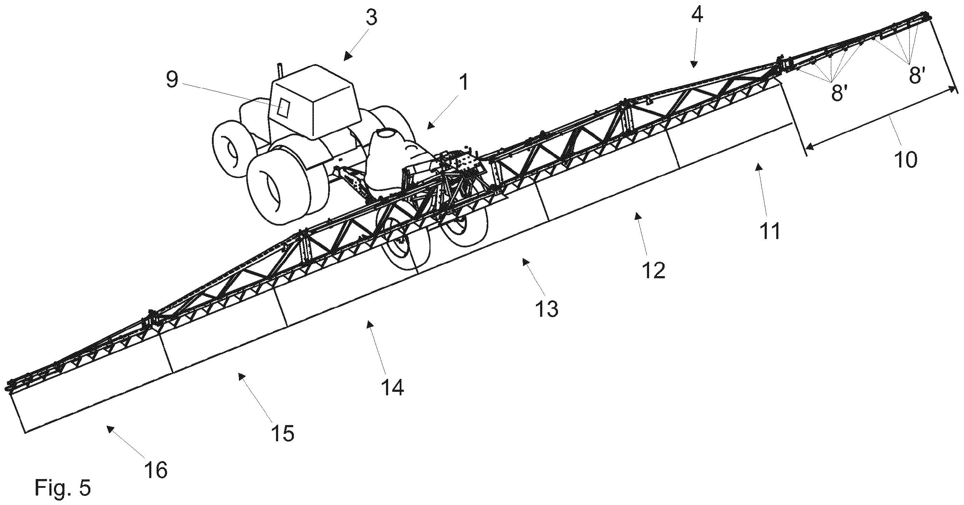

- Fig.5: die landwirtschaftliche Feldspritze mit dem sich in Arbeitsstellung befindlichen Verteilergestänge und der zugeordneten Bedienungseinrichtung, wobei über an dem Verteilergestänge angeordnete Spritzdüsen Spritzflüssigkeit ausgebracht wird gemäß Fig.1, wobei jedoch auf der rechten Seite des Verteilergestänges die Flüssigkeitszufuhr zu den Spritzdüsen der äußersten rechten Teilbreiten im Handmodus abgeschaltet ist,

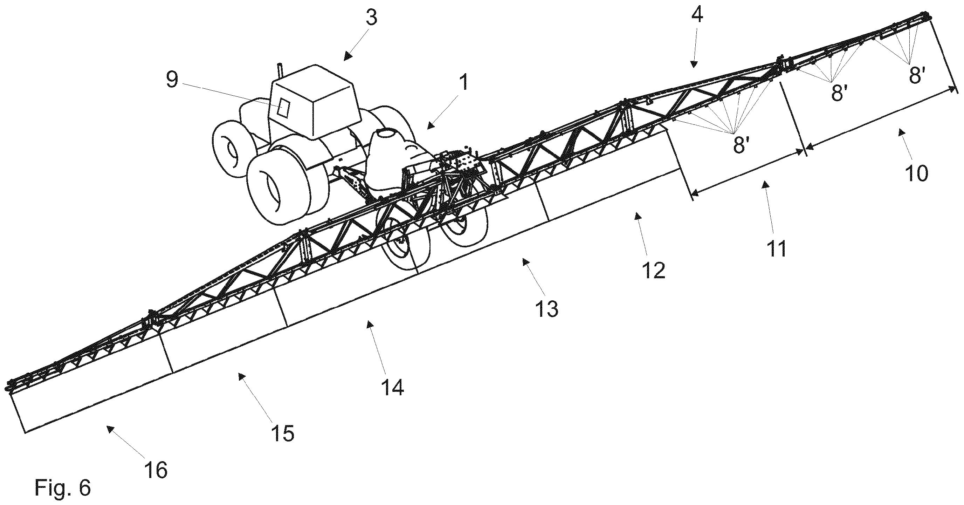

- Fig.6: die landwirtschaftliche Feldspritze mit dem sich in Arbeitsstellung befindlichen Verteilergestänge und der zugeordneten Bedienungseinrichtung, wobei über an dem Verteilergestänge angeordnete Spritzdüsen Spritzflüssigkeit ausgebracht wird gemäß Fig.1, wobei jedoch auf der rechten Seite des Verteilergestänges die Flüssigkeitszufuhr zu den Spritzdüsen der beiden äußersten rechten Teilbreiten im Handmodus abgeschaltet ist,

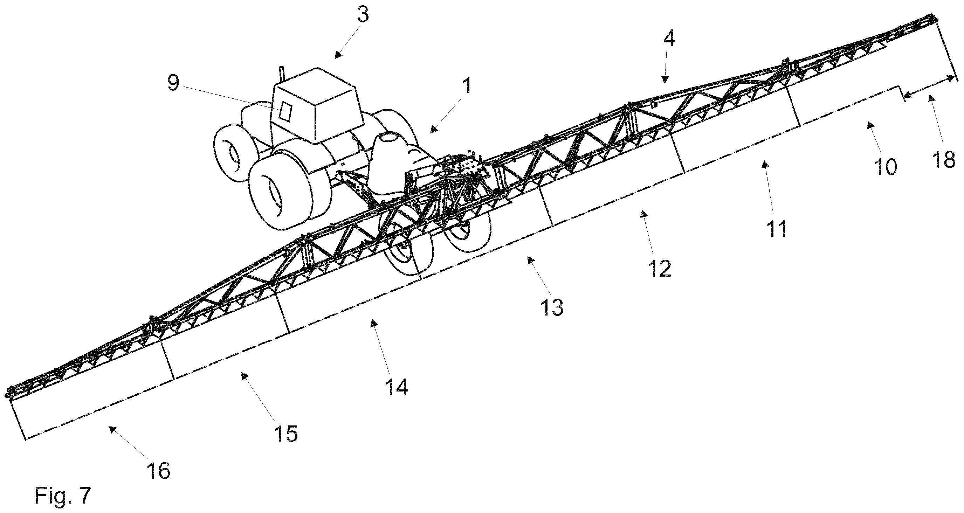

- Fig.7: die landwirtschaftliche Feldspritze mit dem sich in Arbeitsstellung befindlichen Verteilergestänge und der zugeordneten Bedienungseinrichtung, wobei über an dem Verteilergestänge angeordnete Spritzdüsen Spritzflüssigkeit ausgebracht wird gemäß Fig.1, wobei jedoch auf der rechten Seite des Verteilergestänges die Flüssigkeitszufuhr zu den drei äußersten Spritzdüsen im Automatikmodus abgeschaltet ist,

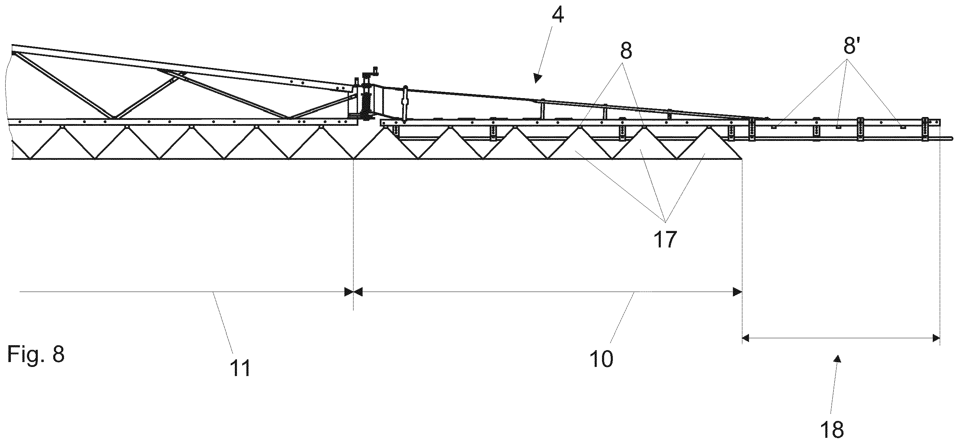

- Fig.8: der rechte Teil des Verteilergestänges in der Betriebsweise gemäß Fig.7 im vergrößerten Maßstab,

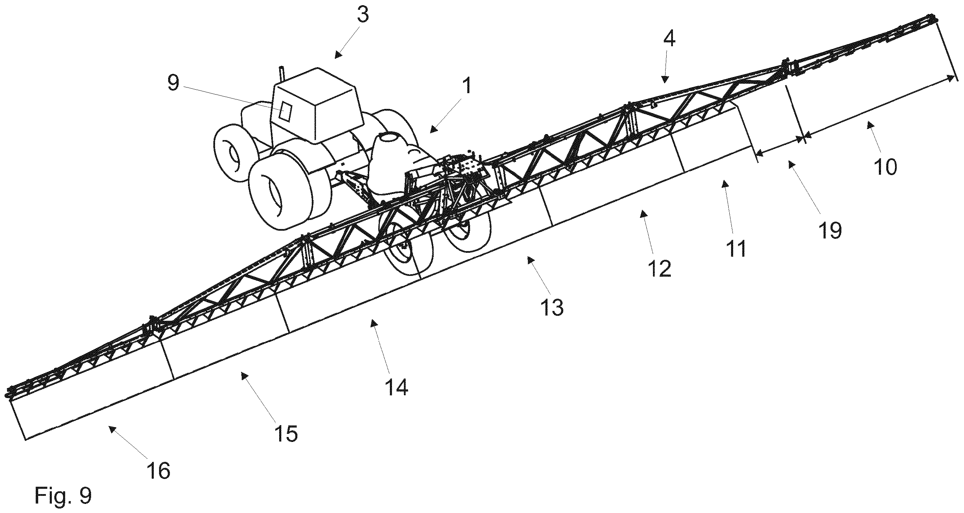

- Fig.9: die landwirtschaftliche Feldspritze mit dem sich in Arbeitsstellung befindlichen Verteilergestänge und der zugeordneten Bedienungseinrichtung, wobei über an dem Verteilergestänge angeordnete Spritzdüsen Spritzflüssigkeit ausgebracht wird gemäß Fig.1, wobei jedoch auf der rechten Seite des Verteilergestänges die Flüssigkeitszufuhr zu den Spritzdüsen bis zur Mitte der zweiten rechten Teilbreite im Automatikmodus abgeschaltet ist und

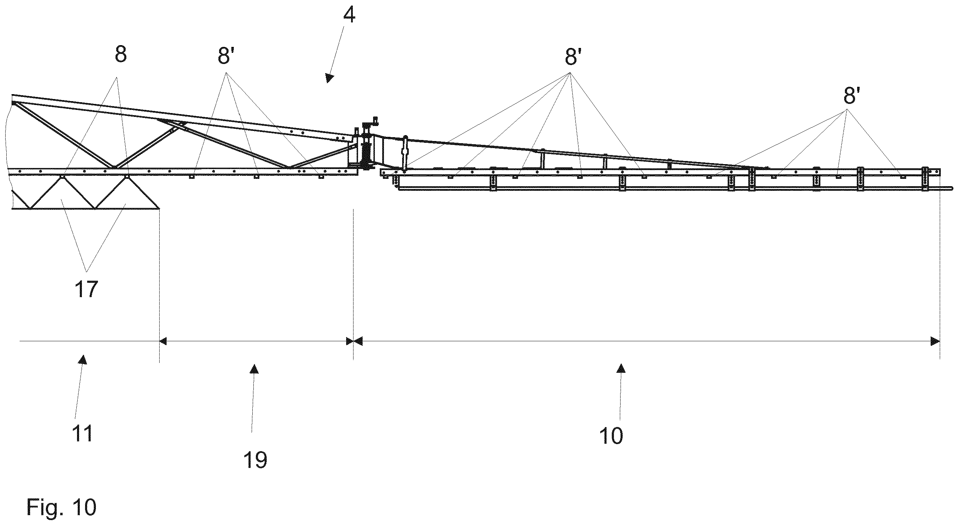

- Fig.10: der rechte Teil des Verteilergestänges in der Betriebsweise gemäß Fig.9 im vergrößerten Maßstab.

Die gezogene landwirtschaftliche Feldspritze 1 ist über die Deichsel 2 an den Ackerschlepper 3 angekoppelt. Die Feldspritze weist das Verteilergestänge 4, das Fahrwerk 5 und den auf dem Rahmen 6 angeordneten Vorratsbehälter 7 auf. An dem Verteilergestänge 4 sind in gleichmäßigen Abständen an der am Verteilergestänge 4 angeordneten Flüssigkeitszuleitung die Anschlussstutzen Düsenkörpern zum Anschluss von Spritzdüsen 8 angeordnet. In dem Düsenkörper ist jeweils ein als Ventilanordnung ausgebildetes Abschaltelement mit fernbedienbaren Schaltelementen angeordnet. Über diese Abschaltelemente kann die Flüssigkeitszufuhr zu den jeweiligen Spritzdüsen 8 zugeschaltet oder abgeschaltet werden. Die fernbedienbaren Schaltelemente der Abschaltelemente werden über eine Bedienungseinrichtung (9) mit zugeordneter Steuerungseinrichtung, die als Bordcomputer, der auf dem Ackerschlepper 3 angeordnet ist, ausgebildet sein kann, angesteuert. Somit können über die Steuerungseinrichtung die Abschaltelemente zur Zu- und Abschaltung der Flüssigkeitszufuhr zu den Spritzdüsen 8 separat geschaltet werden.

Die Bedienungseinrichtung 9 ist so ausgelegt, dass die Abschaltelemente wahlweise im Handmodus oder Automatikmodus betätigbar sind und zwar derart, dass im Automatikmodus jedes einzelne Abschaltelemente einzelnen und/oder individuell betätigbar ist, während im Handmodus nur jeweils gruppenweise zusammengefasste Abschaltelemente gemeinsam betätigbar sind.

Wie in Fig.1 und 2 dargestellt ist, sind sämtliche Spritzdüsen 8 der einzelnen Teilbreiten 10,11, 12,13, 14,15, 16 zugeschaltet, so dass durch entsprechende Flüssigkeitszufuhr zu den Spritzdüsen 8 die auszubringende Flüssigkeit entsprechend der durch die Spritzdüsen 8 ausgebildete Spritzfächer 17 auf dem zu behandelnden Feld ausgebracht wird.

Bei dem Einsatzfall nach Fig. 3 und 4 sind über den Automatikmodus die Abschaltelemente von der Bedienungseinrichtung 9 derart angesteuert, dass nur jede zweite Düse 8 an dem Verteilergestänge 4 zugeschaltet ist, so dass von jeder zweiten Spritzdüse 8 auch nur jeweils ein Spritzfächer 17 ausgebildet wird, wie ein Vergleich der Fig.4 zu der Fig.2 anschaulich zeigt, und in Fig.3 durch die gestrichelten Linien unterhalb des Verteilergestänges 4 symbolisch dargestellt ist.

Bei dem Einsatzfall nach Fig. 5 sind über den Handmodus der Bedienungseinrichtung 9 sämtliche zu einer Gruppe zusammengefassten Spritzdüsen 8' der äußersten Teilbreite 10 abgeschaltet. Somit sind über den Handmodus der Bedienungseinrichtung 9 also nur sämtliche Spritzdüsen 8 der äußersten Teilbreite 10 insgesamt gemeinsam abschaltbar, weil sämtliche Spritzdüsen 8 der jeweiligen Teilbreiten für den Handmodus jeweils zu einer Gruppe zusammengefasst sind.

Bei dem Einsatzfall nach Fig. 6 sind über den Handmodus der Bedienungseinrichtung 9 sämtliche zu einer Gruppe zusammengefassten Spritzdüsen 8' der beiden äußersten Teilbreiten 10 und 11 abgeschaltet. Somit sind über den Handmodus der Bedienungseinrichtung 9 also nur sämtliche Spritzdüsen der beiden äußersten Teilbreite 10 und 11 insgesamt gemeinsam abschaltbar, weil sämtliche Spritzdüsen 8 der jeweiligen Teilbreite für den Handmodus jeweils zu einer Gruppe zusammengefasst sind.

Bei dem Einsatzfall nach Fig.7 und 8 sind über den Automatikmodus der Bedienungseinrichtung 9 die drei äußersten Spritzdüsen 8' der äußersten Teilbreite 10 abgeschaltet, so dass im äußersten Teilbreitenbereich 10 ein äußerer Bereich 18 nicht mit Spritzflüssigkeit besprüht wird, weil die Spritzdüsen 8'hier abgeschaltet sind.

Bei dem Einsatzfall nach Fig.9 und 10 sind über den Automatikmodus der Bedienungseinrichtung 9 die drei äußersten Spritzdüsen 8' der zweitäußersten Teilbreite 11 und sämtliche Spritzdüsen 8'der äußersten Teilbreite 10 abgeschaltet, so dass im äußersten Teilbreitenbereich 10 der gesamte Teilbreitenbereich 10 und im zweitäußersten Teilbreitenbereich 11 ein äußerer Bereich 19 nicht mit Spritzflüssigkeit besprüht wird, weil die Spritzdüsen 8'abgeschaltet sind.

Es sei noch auf folgendes hingewiesen:
Über dem Bordcomputer sind die den Ausbringelementen zugeordneten Abschaltelemente zusätzlich entsprechend des Handmodus nur gruppenweise betätigbar. Somit kann also mit die Bedienungseinrichtung 9 sowohl im Hand- wie auch im Automatikmodus gearbeitet werden.

Wie bereits vorerwähnt entsprechen die gruppenweise zusammengefassten Abschaltelemente, die jeweils den als Spritzdüsen 8 ausgebildeten Ausbringelementen zugeordnet sind, der einer Teilbreite der Feldspritze zugeordnete Abschaltelemente mit zugeordneten Ausbringelementen, die jeweils im Handmodus nur gemeinsam betätigbar sind.

Zur Ansteuerung der Ausbringelemente über die Abschaltelemente mittels des Bordcomputers ist in dem Speicher des Bordcomputers ein standortspezifisch gestütztes Steuerungs- und/oder Regelprogramm hinterlegt, aufgrund dessen der Bordcomputer die jeweiligen Abschaltelemente der jeweiligen Ausbringelemente entsprechend ansteuerbar sind. Hierdurch ist jedes Abschaltelement einer Spritzdüse 8 separat ansteuerbar, so dass entsprechend des hinterlegten Steuerungs- und/oder Regelprogrammes in gewünschter Weise die Spritzflüssigkeit ausgebracht werden kann.

Abschließend sei noch darauf hingewiesen, dass die erfindungsgemäßen Maßnahmen auch bei einer Verteilmaschine Anwendung finden können, die als Sämaschine ausgebildet ist, wobei dann die Ausbringelemente Saatgut und/oder Dünger verteilende Schare sind.

## Patentansprüche

1. Bedienungseinrichtung (9) für landwirtschaftliche Verteilmaschinen, insbesondere Feldspritze (1) oder Sämaschine mit zumindest einer Dosiervorrichtung, von der Dosiervorrichtung zu mehreren an zumindest einem sich quer zur Fahrtrichtung erstreckende Verteilerbalken angeordneten Ausbringelementen, denen von der Bedienungseinrichtung (9) mit zugeordneten Bordcomputer fernbedienbare Abschaltelemente zugeordnet sind, **dadurch gekennzeichnet, dass** die Abschaltelemente von der Bedienungseinrichtung (9) wahlweise im Handmodus oder Automatikmodus betätigbar sind, und zwar derart, dass im Automatikmodus jedes einzelne Abschaltelement einzeln und/oder individuell betätigbar ist, und dass im Handmodus nur jeweils gruppenweise zusammengefasste Abschaltelemente gemeinsam betätigbar sind.

2. Bedienungseinrichtung (9) nach Anspruch 1, **dadurch gekennzeichnet, dass** über dem Bordcomputer die Ausbringelementen (8) zugeordneten Abschaltelemente zusätzlich entsprechend des Handmodus gruppenweise betätigbar sind.

3. Bedienungseinrichtung (9) nach einem oder mehreren der vorstehenden Ansprüche, dass die gruppenweise zusammengefassten Abschaltelemente, die jeweils den Ausbringelementen (8) zugeordnet sind, der einer Teilbreite (10, 11, 12, 13, 14, 15, 16) der Verteilmaschine zugeordneten Abschaltelementen mit zugeordneten Ausbringelementen (8) entsprechen.

4. Bedienungseinrichtung (9) nach einem oder mehreren der vorstehenden Ansprüche, **dadurch gekennzeichnet, dass** zur Ansteuerung der Ausbringelemente (8) über die Abschaltelemente mittels des Bordcomputers in dem Speicher des Bordcomputers ein standortspezifisch gestütztes Steuerungs- und/oder Regelprogramm hinterlegt ist, aufgrund dessen der Bordcomputer die jeweiligen Abschaltelemente der jeweiligen Ausbringelemente (8) entsprechend ansteuert.

5. Bedienungseinrichtung (9) einem oder mehreren der vorstehenden Ansprüche, **dadurch gekennzeichnet, dass** die landwirtschaftliche Verteilmaschine als Feldspritze (1) und der Verteilerbalken als ein zusammenklappbares Verteilergestänge (4) ausgebildet ist, dass die Ausbringelemente Spritzflüssigkeit ausbringende Düsenelemente (8) sind.

6. Bedienungseinrichtung (9) nach einem oder mehreren der Ansprüche 1-4, **dadurch gekennzeichnet, dass** die Verteilmaschine als Sämaschine ausgebildet ist, und dass die Ausbringelemente Saatgut und/oder Dünger verteilende Schare sind.

## Claims

1. Operating device for agricultural spreaders, in particular crop sprayers (1) or seed drills, having at least one metering apparatus, from the metering apparatus to a plurality of dispensing elements, which are arranged on at least one spreader boom extending transversely to the direction of travel and which are assigned switch-off elements, which can be controlled remotely by the operating device (9) with associated onboard computer, **characterized in that** the switch-off elements can be actuated by the operating device (9) optionally in manual mode or automatic mode, to be precise such that, in automatic mode, each individual switch-off element can be actuated individually and/or on its own, and that, in manual mode, it is possible to actuate only respectively grouped switch-off elements together.

2. Operating device (9) according to Claim 1, **characterized in that** it is additionally possible for the onboard computer to actuate the switch-off elements, assigned to dispensing elements (8), in groups, in a manner corresponding to manual mode.

3. Operating device (9) according to one or both of the preceding claims, that the grouped switch-off elements, which are each assigned to the dispensing elements (8), correspond to the of a sub-section (10, 11, 12, 13, 14, 15, 16) of the spreader-assigned switch-off elements with associated dispensing elements (8) .

4. Operating device (9) according to one or more of the preceding claims, **characterized in that**, in order to activate the dispensing elements (8) via the switch-off elements by means of the onboard computer, the memory of the onboard computer has stored in it a site-specific open-loop and/or closed-loop control program, on the basis of which the onboard computer correspondingly activates the respective switch-off elements of the respective dispensing elements (8).

5. Operating device (9) according to one or more of the preceding claims, **characterized in that** the agricultural spreader is designed in the form of a crop sprayer (1) and the spreader boom is designed in the form of a collapsible spreader linkage boom (4), and **in that** the dispensing elements are nozzle elements (8) which dispense spray liquid.

6. Operating device (9) according to one or more of Claims 1-4, **characterized in that** the spreader is designed in the form of a seed drill, and **in that** the dispensing elements are blades which spread seed material and/or fertilizer.

## Revendications

1. Dispositif de commande (9) pour machines de répartition agricoles, en particulier des pulvérisateurs (1) ou des machines à semer, comportant au moins un dispositif de dosage, depuis le dispositif de dosage jusqu'à une pluralité d'éléments d'épandage disposés sur au moins un bras de répartition s'étendant transversalement à la direction de déplacement, et auxquels sont associés par le dispositif de commande (9) des éléments de désactivation pouvant être commandés à distance au moyen d'un ordinateur embarqué associé,
**caractérisé en ce que** les éléments de désactivation peuvent être actionnés de manière sélective en mode manuel ou en mode automatique par le dispositif de commande (9), c'est-à-dire de telle manière qu'en mode automatique, chaque élément de désactivation individuel puisse être actionné séparément et/ou individuellement, et en qu'en mode manuel, seuls les éléments de désactivation rassemblés en groupes puissent être actionnés en commun.

2. Dispositif de commande (9) selon la revendication 1, **caractérisé en ce que** les éléments de désactivation associés aux éléments d'épandage (8) peuvent en outre être actionnés par groupes par l'intermédiaire de l'ordinateur embarqué conformément au mode manuel.

3. Dispositif de commande (9) selon l'une ou plusieurs des revendications précédentes, que les éléments de désactivation, qui sont rassemblés en groupes et respectivement associés aux éléments d'épandage (8), correspondent à la d'un trançon (10, 11, 12, 13, 14, 15, 16) des éléments de désactivation associés de la machine de répartition et comportant des éléments d'épandage (8) associés.

4. Dispositif de commande (9) selon l'une ou plusieurs des revendications précédentes, **caractérisé en ce que**, pour commander les éléments d'épandage (8) par l'intermédiaire des éléments de désactivation au moyen de l'ordinateur embarqué, on enregistre dans la mémoire de l'ordinateur embarqué un logiciel de commande et/ou de régulation spécifique sur la base duquel l'ordinateur embarqué commande de manière correspondante les éléments de désactivation respectifs des éléments d'épandage (8) respectifs.

5. Dispositif de commande (9) selon l'une ou plusieurs des revendications précédentes, **caractérisé en ce que** la machine de répartition agricole est réalisée sous la forme d'un pulvérisateur agricole (1) et **en ce que** le bras de répartition est réalisé sous la forme d'une barre de répartition repliable (4), et **en ce que** les éléments d'épandage sont des éléments à buses (8) permettant l'épandage d'un liquide de pulvérisation.

6. Dispositif de commande (9) selon l'une ou plusieurs des revendications 1 à 4, **caractérisé en ce que** la machine de répartition est réalisée sous la forme d'une machine à semer et **en ce que** les éléments d'épandage sont des socs qui répartissent des semences et/ou des engrais.
